## Europäisches Patentamt
## European Patent Office
## Office européen des brevets

(19)

(11) Numéro de publication: **0 067 102**
A1

(12) **DEMANDE DE BREVET EUROPEEN**

(21) Numéro de dépôt: 82400946.8

(22) Date de dépôt: 24.05.82

(51) Int. Cl.³: **F 16 L 3/20**, F 16 F 7/04

(30) Priorité: 26.05.81 FR 8110426

(43) Date de publication de la demande: 15.12.82
Bulletin 82/50

(84) Etats contractants désignés: **DE GB IT SE**

(71) Demandeur: **INTERNATIONAL VIBRATION ENGINEERING, 29 Route de Milly, F-91820 Boutigny-sur-Essonne (FR)**

(72) Inventeur: **Gildas, Le Pierres, Les Rochettes d'Huison Longueville, F-91590 La Ferte Alais (FR)**

(74) Mandataire: **Lemoine, Michel et al, Cabinet Michel Lemoine 13 Boulevard des Batignolles, F-75008 Paris (FR)**

(54) **Dispositif anti-sismique amortisseur de déplacements mécaniques.**

(57) Le dispositif auto-bloquant amortisseur de déplacements mécaniques comprend deux éléments (1,2) destinés à être fixés sur deux structures. Un mouvement intense de l'un des éléments (2) par rapport à l'autre (1) provoque la mise en rotation d'une tige filetée rotative (14) et un décalage de rotation d'un élément rotatif (18), ce qui provoque par des surfaces d'entraînement (31, 35) l'appui d'une succession d'éléments de friction (37) contre une surface de friction (36) sensiblement fixe pour bloquer la rotation de ladite tige (14). Application aux structures de centrales thermiques ou nucléaires.

0067102

Dispositif anti-sismique amortisseur de déplacements mécaniques.

---------------------------------------------------------------

La présente invention a trait à un dispositif anti-sismique amortisseur de déplacements mécaniques du type destiné à être inséré entre deux structures mobiles l'une par rapport à l'autre pour permettre un déplacement relatif de ces structures lors d'un mouvement de faible accélération ou vitesse et au contraire freiner ce déplacement relatif, ou réduire sa vitesse en cas de mouvement d'accélération ou de vitesse importante.

Des dispositifs de ce type sont notamment utilisés comme dispositif de sécurité anti-sismique dans des centrales thermiques ou nucléaires, notamment entre une structure telle qu'un réacteur et une structure telle qu'une tuyauterie pour permettre un mouvement relatif à faible accélération, par exemple sous l'effet des dilatations thermiques, et au contraire empêcher ou réduire un mouvement relatif de grande accélération, par exemple sous l'effet d'une secousse sismique.

Les dispositifs connus de ce type présentent en général un premier élément relié à l'une des structures, un deuxième élément relié à l'autre structure, le plus souvent des moyens pour transformer un mouvement en général rectiligne de l'un des éléments par rapport à l'autre en un mouvement de rotation et des moyens pour empêcher, freiner ou limiter ce mouvement, notamment cette rotation lorsque l'accélération, ou dans d'autres cas la vitesse, de ce mouvement tend à devenir trop grande.

Parmi ces dispositifs connus, un certain nombre utilise, pour freiner ou bloquer cette pièce rotative directement entraînée par le mouvement de l'un des éléments, une autre pièce qui, lors d'une rotation provoquée par un faible mouvement, se trouve également entraînée mais qui, lors d'un mouvement plus intense, prend par rapport à la première pièce rotative un retard ou un décalage dû soit à son inertie plus grande, soit à des moyens de freinage sensibles à la vitesse ou à l'accélération, ce retard ou décalage étant utilisé pour provoquer l'actionnement de moyens de freinage bloquant la poursuite de la rotation de la première pièce et donc du mouvement de l'élément qui la porte par rapport à l'autre élément.

Un tel dispositif a par exemple déjà été décrit dans le brevet français 2.307.188 déposé le 9 avril 1976 et qui décrit un dispositif dans lequel le décalage ou le retard entre les deux pièces rotatives provoque un mouvement de moyens tels que des biellettes qui déplacent des patins de freinage contre une surface de freinage. De tels dispositifs présentent cependant un certain nombre d'inconvénients. En effet, ils doivent théoriquement permettre un freinage ou un blocage en face d'efforts très importants et en même temps être d'une très grande sensibilité afin d'empêcher, en pratique, un véritable déplacement en cas de mouvement à grande accélération. On a donc été conduit à prévoir des masses d'inertie très importantes et, d'une façon façon générale, des appareils compliqués et très encombrants.

Le brevet français 2.246.276 déposé le 30 septembre 1974 a cependant cherché à apporter une solution à ce problème et il décrit un dispositif dans lequel une pièce d'inertie est reliée à la pièce rotative, sensible au mouvement de l'un des éléments, par un ressort hélicoïdal enroulé autour et à faible distance d'une surface de friction de sorte qu'un retard ou décalage angulaire entre la masse d'inertie, qui peut être relativement faible, et la pièce rotative provoque une variation de diamètre du ressort dont les spires viennent s'appliquer contre la surface de friction et provoquent ainsi une amplification mécanique très élevée assurant un blocage intense.

Cependant, un tel dispositif présente des inconvénients dans la pratique. Tout d'abord il est d'un réglage particulièrement difficile et demande, pour les ressorts, des tolérances de fabrication très sévères. D'autre part, le ressort doit être dimensionné de façon à pouvoir transmettre des efforts importants tout en étant d'une grande sensibilité pour éviter d'avoir à utiliser une masse d'inertie trop importante. Il en résulte que l'emploi pratique d'un tel dispositif dans des installations où l'on recherche à la fois une grande précision, une fiabilité exceptionnelle et un prix de revient économique, pose des problèmes considérables.

La présente invention se propose de remédier à ces inconvénients et de fournir un dispositif anti-sismique amortisseur de déplacements mécaniques permettant d'obtenir, avec une sensibilité extrêmement élevée et un encombrement particulièrement réduit, des forces de freinage extrêmement importantes et ceci de façon simple, économique tout en présentant le degré de fiabilité voulu.

L'invention a pour objet un dispositif anti-sismique amortisseur de déplacements mécaniques comprenant deux éléments susceptibles d'être reliés à deux structures, des moyens pour transformer le mouvement relatif entre les deux éléments en un mouvement de rotation d'une pièce rotative, un élément rotatif susceptible d'être entraîné sensiblement en synchronisme par ladite pièce rotative lorsque celle-ci est soumise à un mouvement peu intense et muni de moyens provoquant un retard ou décalage dudit

4

élément rotatif lorsque ladite pièce rotative tend à l'entraîner en raison d'un mouvement intense, et des moyens de freinage puissant, directs ou indirects, de ladite pièce rotative, lesdits moyens de freinage puissant étant sensibles audit décalage ou retard, caractérisé en ce que lesdits moyens de freinage puissant comprennent une surface allongée de friction fixe ou sensiblement fixe par rapport audit organe rotatif, une surface d'appui parallèle à ladite surface de friction et délimitant avec elle un couloir allongé, une succession d'éléments de friction individuels susceptibles de venir frotter contre ladite surface de friction lorsqu'ils en sont rapprochés, des éléments d'actionnement individuels chaque fois interposés entre deux éléments de friction consécutifs, prenant appui sur ladite surface d'appui et coopérant avec lesdits éléments de friction par effet de rampes ou coins pour les repousser vers ladite surface allongée de friction lorsque la longueur de ladite succession tend à diminuer, ladite succession étant, par une de ses extrémités, au contact d'une surface d'entraînement solidaire de ladite pièce rotative, et par son autre extrémité au contact d'une surface d'entraînement de son côté solidaire dudit élément rotatif de sorte que le décalage entre ladite pièce et ledit élément rotatif provoque une diminution de longueur de ladite succession et par conséquent, la mise en oeuvre des éléments de friction avec une force de friction multipliée.

Dans une forme de réalisation préférée, lesdits éléments de friction sont, à l'état normal, maintenus écartés de la surface de friction par de faibles moyens élastiques et dans ce cas, l'entraînement de l'élément rotatif par la pièce rotative, lors des mouvements peu intenses, peut avantageusement être effectué par la colonne composée de la succession des éléments de friction avec leurs éléments d'actionnement transmettant la poussée de la surface d'entraînement de la pièce rotative à la surface d'entraînement de l'élément rotatif.

Cependant, dans une autre forme de réalisation de l'invention, les moyens élastiques d'écartement des pièces de friction peuvent être omis, la liaison provoquant l'entraînement, aux mouvements de faible intensité, par la pièce rotative, de l'élément rotatif pouvant être effectuée de toutes autres manières, par exemple par une faible ressort. Dans ce cas, les éléments de friction glissent simplement, sans exercer de friction notable, sur la surface de friction lorsque la pièce rotative et l'élément rotatif sont entraînés en synchronisme lors d'un mouvement peu intense.

Le nombre d'éléments de friction est de préférence au moins égal à 5 de façon à obtenir une multiplication particulièrement importante de la force de freinage ou de blocage.

Dans une forme de réalisation avantageuse, les éléments de friction peuvent être des patins individuels présentant, en plus de leur face de friction, deux rampes de sens inverses coopérant avec des éléments d'actionnement tels que par exemple des éléments munis de rampes complémentaires ou des rouleaux ou même des billes.

Dans les autres formes de réalisation, les éléments de friction peuvent être de simples rouleaux espacés entre eux et coopérant avec des éléments d'actiomement qui peuvent soit être des éléments présentant deux rampes de sens opposés coopérant respectivement avec deux rouleaux successifs, soit être eux-mêmes constitués de rouleaux ou de billes.

D'une façon générale, on préférera utiliser des rouleaux ou des billes comme éléments de friction et de préférence comme éléments d'actionnement dans le cas où on ne prévoit pas de moyens maintenant normalement les éléments de friction légèrement à l'écart de la surface fixe de friction car, dans ce cas, le mouvement de rotation normal de faible intensité de la pièce rotative et de

6

l'élément rotatif permettra dans une certaine mesure un roulement desdits éléments de friction sur la surface de friction.

La surface de friction peut être une surface fixe solidaire d'un boîtier du dispositif, par exemple sous forme d'une bague métallique de friction rapportée dans le boîtier.

La surface d'appui destinée à servir d'appui aux éléments d'actionnement d'éléments de friction peut être une surface fixe ou au contraire portée par l'élément rotatif ou la pièce rotative.

De préférence, le canal ainsi formé s'étend pratiquement sur toute la longueur d'une circonférence, les surfaces d'entraînement solidaires l'une de l'élément rotatif, l'autre de la pièce rotative étant alors proches l'une de l'autre et éventuellement imbriquées à jeu l'une dans l'autre. On obtient alors une longueur de couloir maximale permettant de loger une succession d'éléments de friction particulièrement nombreux avec leurs éléments d'actionnement respectifs.

L'élément rotatif qui, comme cela a été dit, est destiné à prendre un retard et donc un décalage par rapport à la pièce rotative en cas de mouvements intenses peut être constitué comme un élément d'inertie. Dans ce cas, la dimension de cet élément peut être relativement faible car un moment d'inertie relativement faible est exigé du fait qu'en raison de l'amplification extrêmement importante des forces de friction, un petit décalage est suffisant.

En variante, l'élément rotatif peut être un élément freiné en fonction de la vitesse, c'est-à-dire pratiquement libre aux faibles vitesses de rotation et freiné de plus en plus énergiquement lorsque la vitesse s'accroît, par exemple en utilisant un milieu fluide ou visqueux de freinage. Bien entendu, l'élément peut avoir aussi une fonction mixte, c'est-à-dire être conçu en tant qu'élément de freinage sensible à la vitesse.

Selon un perfectionnement de l'invention, le dispositif peut encore être muni de moyens le rendant pratiquement insensible aux vibrations de l'une des deux structures entre lesquelles il est monté. Ainsi, l'élément du dispositif relié à la structure en vibration est monté par rapport à cette structure avec un jeu supérieur à l'amplitude des vibrations rencontrées en pratique. En outre, le dispositif est conçu pour que l'effort destiné à faire déplacer l'un des éléments par rapport à l'autre soit supérieur au poids de la partie mobile soumise aux vibrations.

De cette façon, sous l'effet des vibrations, l'élément du dispositif monté sur la structure qui vibre se place par rapport à celle-ci pour répartir au mieux les vibrations dans le jeu disponible de sorte que l'effet des vibrations se trouvent pratiquement annulé.

D'autres avantages et caractéristiques de l'invention apparaîtront à la lecture de la description suivante, faite à titre d'exemple non limitatif et se référant au dessin annexé dans lequel :

La figure 1 représente une vue avec une coupe partielle axiale d'un dispositif selon l'invention.

La figure 2 représente une vue développée de la succession d'éléments de friction dans son couloir.

La figure 3 représente une vue analogue à la figure 2 dans une variante.

La figure 4 représente une vue analogue à la figure 2 dans une autre variante.

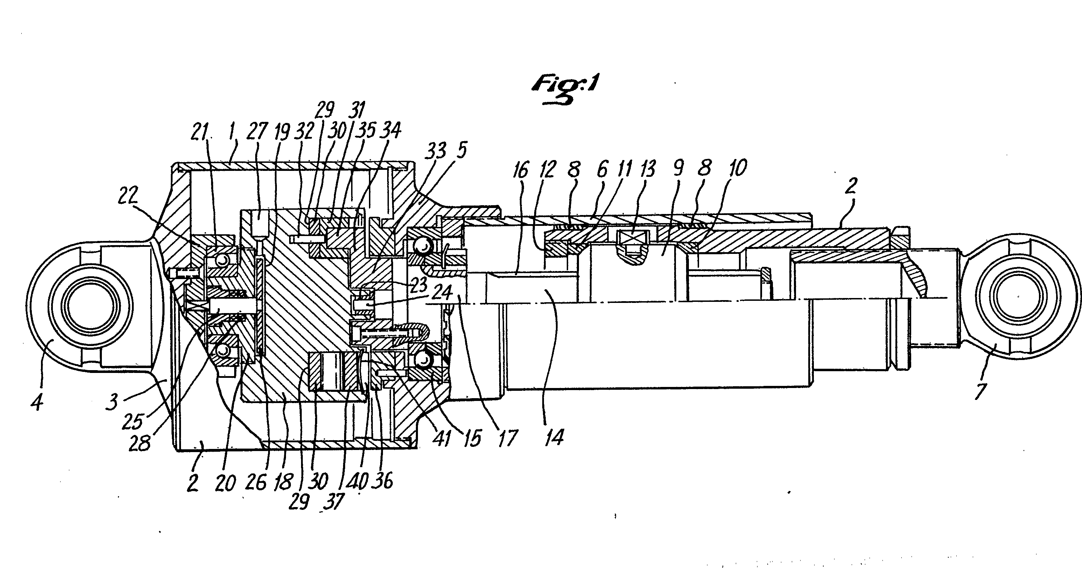

On se réfère aux figures 1 et 2.

Le dispositif représenté, destiné à être utilisé pour relier une tuyauterie à une structure fixe comporte deux éléments 1 et 2 susceptibles de coulisser l'un par rapport à l'autre de façon télescopique. L'élément 1 comporte un boîtier 2 ayant une forme de révolution avec une paroi d'extrémité 3 à laquelle est fixée une patte 4 conformée

par exemple pour être reliée au moyen d'une articulation à rotule à l'une des deux structures à relier.

De l'autre côté, le boîtier 2 se poursuit par un manchon de raccordement de diamètre réduit 5 dans lequel est vissé un manchon tubulaire 6 dont la surface interne forme un alésage rectifié.

L'élément 2, qui comporte à son extrémité extérieure une patte 7 identique à la patte 4 pour une fixation à rotule sur l'autre structure, pénètre à l'intérieur du manchon 6 de l'élément 1, dans lequel il est guidé de façon coulissante grâce à deux bagues de guidage 8 glissant dans l'alésage précité.

L'élément 2 comporte encore, vers son extrémité opposée à la patte 7, un écrou 9 calé contre un siège 10 de l'élément 2 grâce à un deuxième siège 11 maintenu en place par une bague filetée 12 vissée dans l'élément 2. L'écrou 9 est non seulement solidaire en translation de l'élément 2 mais également en rotation grâce à des moyens de clavetage 13.

Une tige rotative 14, coaxiale aux deux éléments 1, 2, est montée dans l'élément 1 par un palier à billes 15 porté par la pièce 5. Cette tige 14 présente un filetage 16 vissé dans le taraudage correspondant de l'écrou 9. La tige rotative 14, qui forme la pièce rotative, est axialement calée par rapport à l'élément 1 et l'on comprend donc qu'un mouvement de translation de l'élément 2 par rapport à l'élément 1 provoque, en raison du déplacement de l'écrou 9, une mise en rotation de la tige 14 autour de son axe.

La tête 17 de la tige 14 qui porte la bague intérieure du roulement à billes 15 est alignée avec un élément rotatif 18 susceptible de tourner dans le boîtier 2 de l'élément 1. Cet élément rotatif, qui possède une forme de révolution, présente du côté opposé à la tête 17 une creusure de révolution 19 qui est boturée par une pièce d'obturation 20 vissée dans l'élément 18, ladite pièce d'obturation 20 étant montée dans un roulement à billes 21 porté par une pièce 22 fixée sur la paroi d'extrémité 3. L'élément rotatif 18 avec sa pièce d'obturation 20 est pivoté à son autre extrémité autour d'une bague de matière auto-lubrifiante 23 portée par un petit prolongement axial 24 de la tête de tige filetée 17.

La pièce 22 porte rigidement un pivot axial fixe 25 qui traverse à jeu la pièce d'obturation 20 et supporte à son extrémité libre un disque 26 fixe en rotation et occupant la plus grande partie de l'espace situé dans la creusure 19 derrière l'élément d'obturation 20. L'espace qui reste encore libre dans la creusure est rempli d'une graisse visqueuse et cet espace est en communication, par un court passage radial dans l'élément 18, avec un organe de compensation de dilatation 27. Par ailleurs, un joint d'étanchéité glissant 28 est interposé entre le pivot 25 et la pièce rotative d'obturation 20. On comprend donc que, lorsque l'élément se met à tourner dans le boîtier 2, la graisse contenue dans la creusure 19 et disposée autour du disque 26 exerce un effort de freinage pratiquement nul pour une faible vitesse de rotation et croissant lorsque la vitesse de rotation augmente.

Sur sa face opposée à la tête 17 de l'organe rotatif, c'est-à-dire de la vis, l'élément rotatif 18 présente une gorge circulaire à section transversale rectangulaire dont le fond 29 est perpendiculaire à l'axe géométrique du dispositif. Sur le fond 29 est disposée, dans la gorge, une rondelle de matériau dur, par exemple d'acier, 30. Un organe de butée 31 présentent une section en U est disposé en un point de la gorge avec sa base appliquée contre la rondelle 30, l'organe 31 étant rendu solidaire de l'élément rotatif 18 par un goujon 32. Par ailleurs, sur l'extrémité de la tête orientée vers l'élément rotatif 18 est fixée une pièce d'entraînement ou de butée 33 ayant la forme générale d'une bague de révolution et munie d'un bras radial 34 se terminant par une extrémité recourbée 35 pénétrant dans la gorge de l'élément 18 et susceptible de passer à jeu à l'intérieur des branches de l'organe 30. Au montage, la position angulaire de la vis 14 et de l'élément rotatif 18 est telle que la partie 35 de l'organe d'entraînement 33 se trouve exactement insérée dans l'organe d'entraînement 31 comme on le voit sur la figure 2, l'épaisseur de l'organe 31 et de la partie 35 étant la même de sorte que leurs faces radiales se trouvent en alignement.

En face de la gorge circulaire de l'élément 18, le manchon 5 du boîtier 2 porte une bague de friction 36 réalisée en métal dur pour former une surface annulaire plate de friction. On a ainsi réalisé une sorte de couloir entre l'anneau 30 qui tapisse le fond de la gorge et la bague de friction 36 située au voisinage de l'ouverture de la gorge, ce couloir circulaire étant interrompu en un seul endroit par l'organe 31 à l'intérieur duquel est normalement positionnée la partie 35. Dans ce couloir on a monté une succession de patins de friction 37 qui sont représentés en coupe sur la figure 2. Chaque patin 37 présente une face de friction 38 orientée vers la bague de friction 36 et une face opposée munie de deux chanfreins ou rampes de sens opposés 39. Au milieu de la face de friction 38 est pratiquée une entaille radiale 40 à travers laquelle passe une lame élastique 41 formant un faible ressort et dont les extrémités sont immobilisées dans deux petites gorges pratiquées dans les lèvres de la gorge circulaire, comme on le voit sur la figure 1. On comprend que ces faibles ressorts 41 ont tendance spontanément à éloigner légèrement les patins de la surface de friction 36.

Entre deux patins 37 consécutifs sont disposés des rouleaux cylindriques 42 de façon telle que chaque rouleau repose d'une part contre l'anneau d'appui 30 et d'autre part contre les rampes opposées 39 de deux patins consécutifs. Par ailleurs, les deux patins extrêmes de la succession, c'est-à-dire les deux patins disposés de part et d'autre des organes 31 et 35, coopèrent par leurs rampes 39 correspondantes avec deux rouleaux 42a et 42b identiques aux rouleaux 42.
A l'état normal, c'est-à-dire lorsque le dispositif selon
l'invention n'est soumis à aucun mouvement, les différents
petits ressorts 41 repoussent leurs patins respectifs à
l'écart de la surface de friction 36 et la coopération entre
les rampes 39 et les galets 42, 42a et 42b a pour effet
que les patins s'écartent le plus possible les uns des autres
de façon régulière, les deux rouleaux extrêmes 42a, 42b
s'appliquant contre les faces correspondantes de la partie
d'organe 35 et des branches, qui l'entourent, de l'organe
d'actionnement 31. On comprend par ailleurs que cette position tend à être spontanément reprise lorsque aucune force
contraire ne s'y oppose.

Le fonctionnement du dispositif selon l'invention
est alors le suivant : lorsque, le dispositif étant initialement au repos comme décrit, les parties 1 et 2 se rapprochent
ou s'écartent avec un mouvement relatif de faible vitesse,
ce mouvement est transformé par l'écrou 9 en un mouvement
de rotation de la vis 14, rotation qui s'effectue à faible
vitesse. Ce mouvement de rotation est transmis de cette
pièce rotative 14 à l'élément rotatif 18 par l'intermédiaire
du bras 34 avec sa partie d'entraînement 35 qui appuie,
suivant le sens de rotationn, sur l'un des deux rouleaux
extrêmes, par exemple le rouleau 42a lequel transmet la
poussée au premier patin 37. La poussée étant faible, celui-
ci, en raison de son ressort 41, ne se rapproche pas de
la surface de friction mais transmet simplement la poussée
au rouleau 42 suivant qui la transmet au patin consécutif
et ainsi de suite, le rouleau 42b transmettant alors la
poussée aux deux branches de l'organe 31 solidaire de
l'élément rotatif 18, qui se met à tourner. Ce mouvement
de rotation provoque un très léger freinage en raison de la
présence de la graisse visqueuse dans la creusure 19 mais
ce freinage est insuffisant pour entraîner un décalage
entre la pièce ou vis 14 et l'élément rotatif 18. Ce mouvement lent pourra donc se poursuivre sans entrave et le dispositif permet donc un déplacement relatif à faible vitesse entre les deux structures sur lesquelles dont fixées les pattes 4 et 7.

Si par contre la vitesse du mouvement s'accroît, la vitesse de rotation de la vis 14 s'accroît , ce qui a pour effet d'augmenter le freinage dans la creusure 19 qui rapidement entraîne l'élément 18 à opposer une résistance accrue à l'effort de rotation que la vis 14 tend à lui translettre. Les faibles ressorts 41, en raison de la distribution des forces dans la succession d'éléments 37, ne sont plus capables de surmonter cette résistance de freinage et il se produit donc un décalage entre l'organe d'actionnement 31 et l'organe d'actionnement 35, l'organe d'actionnement 31 prenant du retard. Ce faisant, la distance circulaire disponible pour la succession de patins 37 avec leurs galets 42, 42a devient plus petite et, par l'effet de rampe des rampes 39, les patins 37 sont repoussés vers la surface de friction 36. En raison de la succession de patins 37 avec leurs éléments d'actionnement 42, 42a, 42b prenant appui sur la surface d'appui 30, il se produit une multiplication de l'effort de friction aboutissant à un blocage extrêmement énergique des patins contre la surface de friction 36, ce qui provoque le ralentissement de l'élément 18 et de la vis 14 et par conséquent freine le mouvement relatif entre les éléments 1 et 2.

On comprend donc que, si le dispositif selon l'invention autorise un mouvement relatif à faible vitesse entre les parties 1 et 2, il s'oppose avec une force de friction intense au déplacement à une vitesse accrue entre ces éléments.

L'effort de freinage est un multiple énorme du faible effort de freinage dû à la rotation de l'élément rotatif 18 par rapport à la matière visqueuse dans la creusure 19 et l'on obtient donc, grâce à l'invention, la possibilité d'assurer un freinage entre deux structures, mêmes lorsque celles-ci tendent à se déplacer l'une vers l'autre avec une force intense. En outre, le réglage peut être extrêmement fin, en fonction des caractéristiques du freinage et notamment de la viscosité du matériau et du nombre de patins ainsi que du choix de la force des petits ressorts 41 ainsi que de l'inclinaison des rampes.

L'invention a été décrite à propos d'un dispositif dans lequel le décalage est produit par le freinage à l'aide d'une matière visqueuse de sorte que le dispositif répond au mouvement relatif de faible vitesse et freine dès qu'un mouvement se produit avec une vitesse supérieure à une vitesse prédéterminée. L'invention comprend également le cas où le décalage est produit en utilisant l'inertie d'un élément rotatif tel que 18 de sorte que le décalage est nul ou insignifiant pour un mouvement de faible accélération alors qu'il devient important pour un mouvement ayant une accélération supérieure ou égale à une accélération prédéterminée. En variante, le dispositif peut être sensible aux vitesses et aux accélérations. Ainsi dans le dispositif représenté sur la figure 1, l'élément 18 peut en outre être constitué comme un élément présentant un moment d'inertie, par exemple, en le réalisant en un matériau lourd et en lui donnant les dimensions suffisantes.

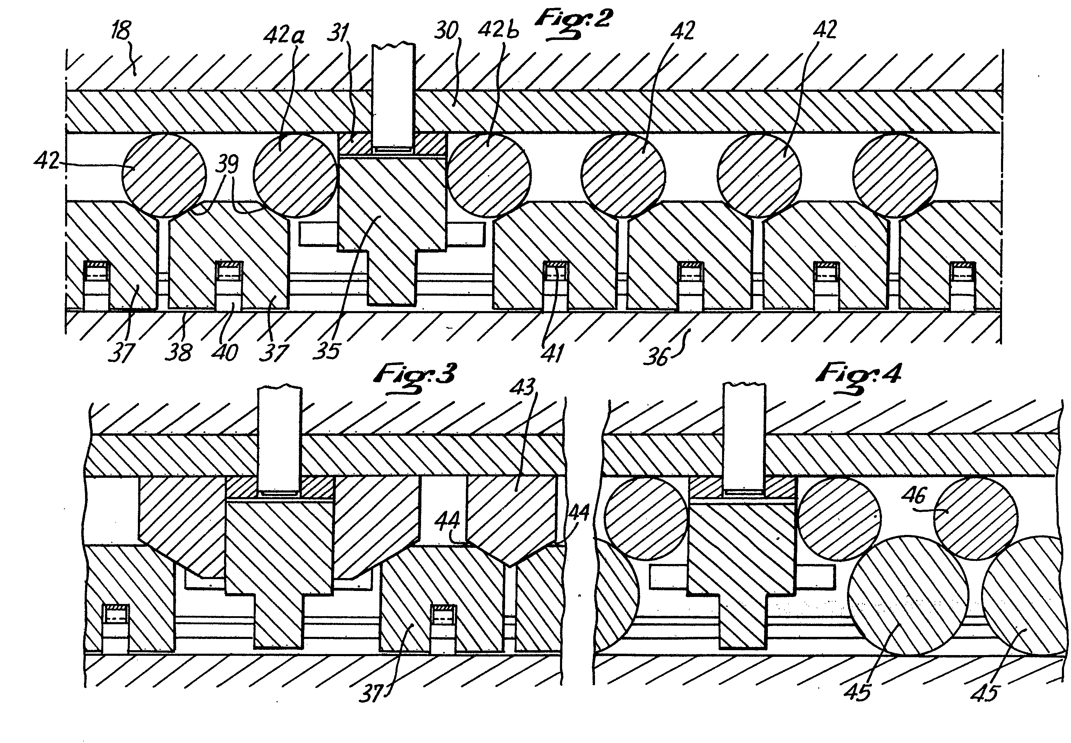

On se réfère maintenant à la figure 3.

Dans cette forme de réalisation, les éléments de freinage sont encore des patins 37 identiques à ceux déjà décrits. Par contre, les éléments d'actionnement qui prennent appui sur l'anneau plat 30 sont des coins complémentaires 43 possédant deux rampes 44 coopérant respectivement avec les rampes 39 de deux patins 37 adjacents. Pour le reste, le fonctionnement est le même.

En se référant à la figure 4, on voit une succession dans laquelle les éléments de friction individuels sont cette fois constitués par des rouleaux ou galets 45 ; deux rouleaux 45 consécutifs sont chaque fois séparéspar un intervalle et l'on voit que ces rouleaux 45 coopèrent avec des éléments d'actionnement constitués par des rouleaux 46 analogues aux rouleaux 42 ; on comprend que dans ce cas, lorsque l'organe 31 et la partie 35 se décalent angulairement, la longueur de couloir dans laquelle est placée la succession d'éléments 45 se raccourcit. Les rouleaux 46 prennent alors appui contre l'anneau 30 et coincent les rouleaux 45 contre la surface de friction 36. Dans un tel dispositif, on peut ne pas prévoir d'éléments élastiques tendant normalement à écarter les éléments 45 de la surface d'appui. En effet, tant que la vis 14 est autorisée à tourner, les rouleaux roulent sans difficulté contre la surface de friction 36. Si l'on omet ces ressorts, qui peuvent d'ailleurs être également omis dans les formes de réalisation des figures 1 et 3, on peut relier angulairement l'organe rotatif 17 de la vis 14 et l'élément rotatif 18 par un moyen convenable, par exemple un faible ressort (non représenté) qui permet à la vis 14 d'entraîner l'élément 18 en rotation lorsque le mouvement est autorisé en raison de la faible résistance de freinage ou d'inertie, mais qui est suffisamment faible pour ne pas s'opposer à un décalage produit par un freinage plus important ou des forces d'inertie accrues.

Enfin on comprend que l'invention est susceptible de faire l'objet de nombreuses variantes. Ainsi on pourrait intervertir les rôles de l'écrou 9 et de la vis 14. De même, le montage pourrait être différent. Par ailleurs, le couloir comprenant la succession d'éléments peut être disposé autrement. Ainsi la surface de friction 36, au lieu d'être annulaire, plane et disposée dans un plan radial pourrait être cylindrique et concentrique à l'axe du dispositif ou encore inclinée de façon tronconique par rapport à cet axe. Cette surface peut également être diédrique ou polyédrique et les éléments de freinage réalisés de façon correspondante.

Par ailleurs, les galets ou rouleaux 42 peuvent être remplacés par des billes, comprenant alors une première nappe de plusieurs rangées de billes parallèles constituant les éléments de freinage et une deuxième nappe de plusieurs billes partiellement intercalées entre les premières pour constituer les éléments d'actionnement des billes de freinage.

REVENDICATIONS

1. Dispositif anti-sismique amortisseur de déplacements mécaniques comprenant deux éléments susceptibles d'être liés à deux structures, des moyens pour transformer le mouvement relatif entre les deux éléments en un mouvement de rotation d'une pièce rotative, un élément rotatif susceptible d'être entraîné sensiblement en synchronisme par ladite pièce rotative lorsque celle-ci est soumise à un mouvement peu intense et muni de moyens provoquant un retard ou décalage dudit élément rotatif lorsque ladite pièce rotative tend à l'entraîner en raison d'un mouvement intense, et des moyens de freinage de ladite pièce rotative, lesdits moyens de freinage étant sensibles audit décalage ou retatd, caractérisé en ce que lesdits moyens de freinage comprennent une surface allongée de friction sensiblement fixe (36), une surface d'appui (30) parallèle à ladite surface de friction (36) et délimitant avec elle un couloir allongé, une succession d'éléments de friction individuels (37) susceptibles de venir frotter contre ladite surface de friction (36) lorsqu'ils en sont rapprochés, des éléments d'actionnement individuels (42, 42a, 42b), chaque fois interposés entre deux éléments de friction consécutifs, prenant appui sur ladite surface d'appui (30), coopérant avec lesdits éléments de friction (37) par effet de rampe ou coin (39) pour les repousser vers ladite surface lorsque la longueur de ladite succession tend à diminuer, ladite succession étant, par une de ses extrémités, au contact d'une surface d'entraînement (35) solidaire de ladite pièce rotative (14) et par son autre extrémité au contact d'une surface d'entraînement (31) solidaire dudit élémnet rotatif (18) de sorte que le décalage entre ladite pièce (14) et ledit élément rotatif (18) provoque une diminution de longueur de ladite succession et, par conséquent, la mise en oeuvre des éléments de friction (37) avec une force de friction multipliée.

2. Dispositif selon la revendication 1, caractérisé en ce que lesdits éléments de friction (37) sont, à l'état normal, maintenus écartés de la surface de friction (36) par de faibles moyens élastiques (41).

3. Dispositif selon la revendication 2, caractérisé en ce que l'entraînement de l'élément rotatif (18) par la pièce rotative (14) est effectué par la colonne composée de la succession des éléments de friction (37) avec leurs éléments d'actionnement (42, 42a, 42b) transmettant la poussée.

4. Dispositif selon l'une quelconque des revendications 1 et 2, caractérisé en ce que la liaison provoquant, aux mouvements de faible intensité, l'entraînement de l'élément rotatif (18) par la pièce rotative (14) est effectuée par un faible ressort.

.5 Dispositif selon l'une quelconque des revendications 1 à 4, caractérisé en ce que le nombre d'éléments de friction est au moins égal à 5.

6. Dispositif selon l'une quelconque des revendications 1 à 5, caractérisé en ce que lesdits éléments de friction (37) sont des patins individuels présentant, en plus de leurs faces de friction, deux rampes de sens inverses (39) coopérant avec lesdits éléments d'actionnement (42, 42a, 42b, 43).

7. Dispositif selon l'une quelconque des revendications 1 à 5, caractérisé en ce que lesdits éléments de friction sont des rouleaux (45) ou billes.

8. Dispositif selon l'une quelconque des revendications 6 et 7, caractérisé en ce que lesdits moyens d'actionnement sont des rouleaux (42, 46) ou billes.

9. Dispositif selon l'une quelconque des revendications 6 et 7, caractérisé par le fait que lesdits moyens d'actionnement sont des éléments (43) munis de rampes de sens opposés (44).

10. Dispositif selon l'une quelconque des revendications 1 à 9, caractérisé en ce que ladite surface de friction (36) présente la forme d'une bague annulaire située en face d'une gorge annulaire pratiquée dans ledit élément rotatif (18) muni en son fond de ladite surface d'appui (30).

Fig:1

*Fig:2*

*Fig:3*

*Fig:4*

2/2

0067102

Office européen
des brevets

**RAPPORT DE RECHERCHE EUROPEENNE**

EP 82 40 0946

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | US-A-4 196 796 (KANAMARU) <br><br> *Abrégé; figures* | 1,2,3, 4,6,8 | F 16 L 3/20 <br> F 16 F 7/04 |
| A | US-A-3 382 955 (DEYERLING) | | |

**DOMAINES TECHNIQUES RECHERCHES (Int. Cl. ³)**

F 16 L
F 16 F
E 04 B
G 21 D
G 21 C

Le présent rapport de recherche a été établi pour toutes les revendications

| Lieu de la recherche | Date d'achèvement de la recherche | Examinateur |
|---|---|---|
| LA HAYE | 02-09-1982 | HUBEAU M.G. |